**Europäisches Patentamt**

(19) **European Patent Office**

**Office européen des brevets**

(11) Publication number: **0 287 683 B1**

(12) # EUROPEAN PATENT SPECIFICATION

(45) Date of publication of patent specification:
**08.05.91 Bulletin 91/19**

(51) Int. Cl.⁵: **E04H 9/02, E04B 1/36**

(21) Application number: **87907130.6**

(22) Date of filing: **28.10.87**

(86) International application number:
**PCT/JP87/00828**

(87) International publication number:
**WO 88/03215 05.05.88 Gazette 88/10**

(54) **VIBRATION-PROOF STRUCTURE.**

(30) Priority: **28.10.86 JP 256397/86**
**14.05.87 JP 117296/87**

(43) Date of publication of application:
**26.10.88 Bulletin 88/43**

(45) Publication of the grant of the patent:
**08.05.91 Bulletin 91/19**

(84) Designated Contracting States:
**DE FR GB IT**

(56) References cited:
**DE-A- 2 921 828**
**GB-A- 2 139 735**
**JP-A-59 179 907**
**JP-Y- 5 138 699**
**JP-Y- 5 138 700**
**PATENT ABSTRACTS OF JAPAN, vol. 11, no.**
**160 (M-592)[2607], 23rd May 1987; & JP-A-61**
**294 234 (TAKASHI FUJITA) 25-12-1986**

(73) Proprietor: **SUMITOMO GOMU KOGYO**
**KABUSHIKI KAISHA**
**1-1, Tsutsuicho 1-chome Chuo-ku Kobe-shi**
**Hyogo 651 (JP)**

Proprietor: **SUMITOMO KENSETSU**
**KABUSHIKI KAISHA**
**13-4, Araki-cho Shinjuku-ku**
**Tokyo 160 (JP)**

(72) Inventor: **SASAKI, Teruo**
**58-324, 12, Noto-cho**
**Nishinomiya-shi Hyogo 662 (JP)**
Inventor: **MIYAMOTO, Yoshiaki**
**25-3, Kawamo 5-chome**
**Takarazuka-shi Hyogo 665 (JP)**
Inventor: **MIYAZAKI, Mitsuo**
**3-3-306, Tsurugashima-cho 3-chome**
**Irima-gun, Saitama 350-02 (JP)**
Inventor: **ARIMA, Fumiaki**
**Satsukikopo, 3-9-7**
**Chiyoda, Sagamihara-shi Kanagawa 229 (JP)**
Inventor: **SAKURAOKA, Makoto**
**4-9-5, Minamitamondai**
**Tarumi-ku Kobe-shi, Hyogo 655 (JP)**
Inventor: **TANAKA, Hisaya**
**HG Tateshina 205, 2-37-23**
**Ekihigashidouri, Oyama-shi Tochigi 323 (JP)**

(74) Representative: **Hillier, Peter et al**
**Reginald W. Barker & Co., 13, Charterhouse**
**Square**
**London, EC1M 6BA (GB)**

EP 0 287 683 B1

## Description

The present invention relates to an earthquake-proofing device of peripherally restrained type for carrying or supporting a structure while reducing earthquake input and vibration-proofing the structure, and particularly to a vibration-proofing device of peripherally restrained type using an elastic, visco-elastic or viscous body as a load carrier externally surrounded by restraining laminated members to impart a high vertical rigidity to the device while allowing the device to deform horizontally to a great extent, so that the device is capable of earthquake-proofing and vibration-proofing structures and machines.

As for earthquake-proofing systems for structures including buildings, laminated rubber bearings have come into wide use, and they are classified into three types.

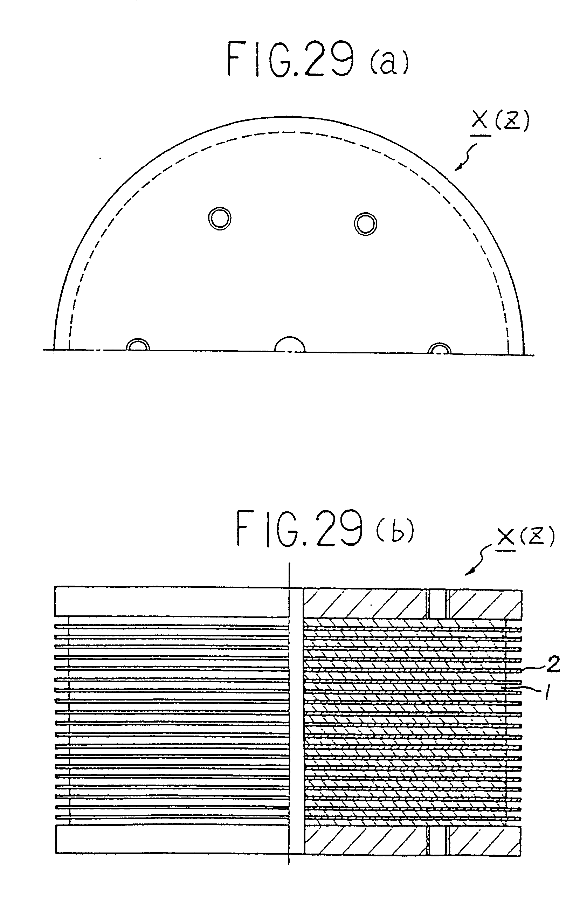

A first proposed type, as shown in Figs. 29 (a) and (b), is a laminated rubber bearing $\underline{X}$, wherein rubber plates 1 which are low in compression permanent strain, such as natural rubber, and steel plates 2 are alternately laminated and fixed together. Since this type has a high ratio of vertical compression rigidity to horizontal shear rigidity, it reduces transmission of earthquake energy to a structure while stably supporting the structure, which is a heavy object, against earthquakes.

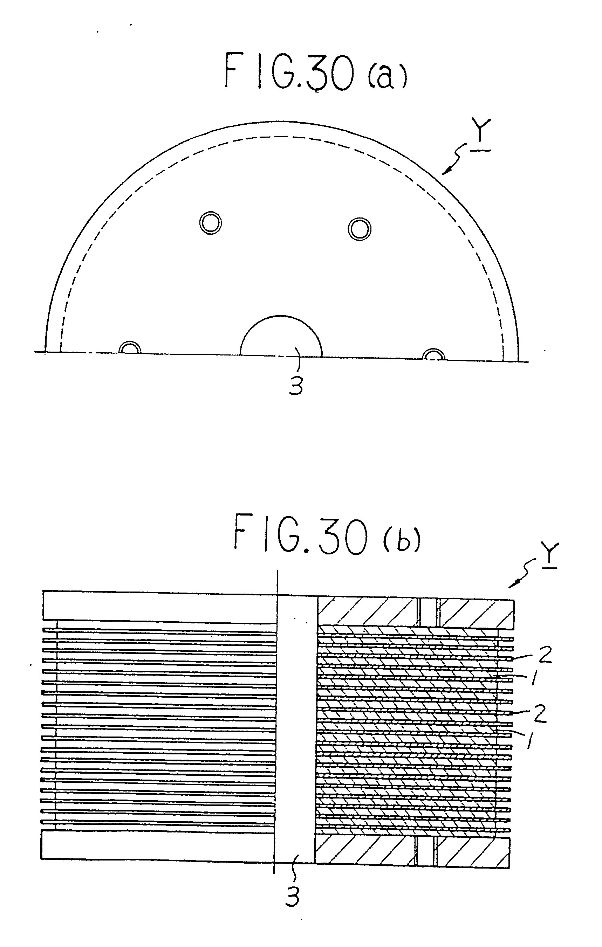

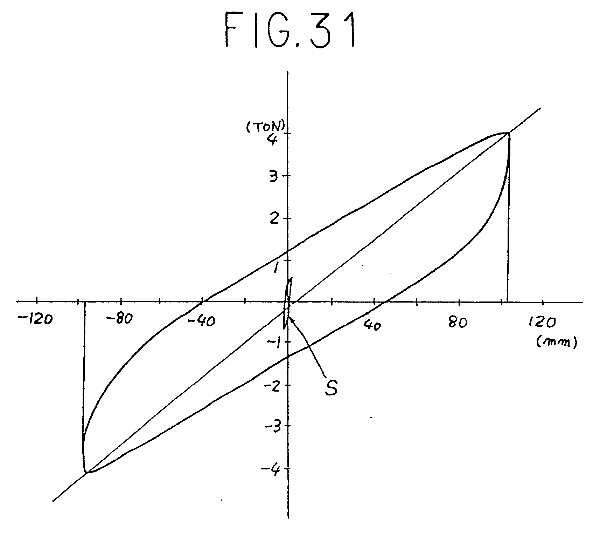

A second type is a lead-laminated rubber bearing $\underline{Y}$ (Japanese Patent Publication No. 17984/1986) which is a modification of the laminated construction used for said first type of laminated rubber bearing, incorporating a lead plug 3, as shown in Figs. 30 (a) and (b), vertically inserted therein. Thanks to hysteresis damping provided by plastic strain of the lead inserted in the interior as indicated-by a load-displacement curve shown in Fig. 31, this type reduces the amplitude of vibration of a structure produced by an earthquake and quickly damps the vibrations.

A third proposed type is a highly damping laminated rubber bearing $\underline{Z}$, which is a modification of the laminated rubber bearing $\underline{X}$ shown in Figs. (a) and (b), wherein the laminate itself is given a damping property by using highly damping rubber for rubber plates 1.

However, the aforesaid laminated rubber bearings $\underline{X}$, $\underline{Y}$ and $\underline{z}$ have the following respective problems.

The first proposed type of laminated rubber bearing $\underline{X}$ has a vibration damping property which is so low that the direct use of the same will result in an increased amplitude of vibration of a structure during an earthquake ; thus, the bearing lacks safety. Therefore, usually, in use it is combined with a separate damper disposed in parallel therewith. In this case, the point of action of restoring force does not coincide with the point of action of damping force, so that there is the danger of giving unnecessary torsional vibrations to the structure.

In the second type of lead-laminated rubber bearing $\underline{Y}$, the lead plug 3 develops a high initial shear rigidity for slight vibration, as shown by a characteristic $\underline{S}$ in Fig. 31 ; thus, the bearing has poor vibration proofing performance such that it transmits traffic vibrations produced by passage of vehicles. Therefore, it can hardly be applied to a building or floor for installing machines where vibrations are objectionable. Another problem is that the restoration to the original point subsequent to substantial deformation is retarded by the plasticity of the lead.

In the proposed third type of highly damping laminated rubber bearing $\underline{Z}$, the amount of creep of the highly damping rubber is high and its restoring force associated with horizontal displacement is low ; thus, there is a problem that the reliability for prolonged use is low. Further, the amount of creep differs from one highly damping laminated rubber bearing to another, so that as a result of the earthquake-proofing action, the building shows non-uniform subsidence, causing unnecessary stresses to be produced in the structure.

GB-A-2139735 discloses an earthquake-proofing device of peripherally restrained type having an elastic load carrier disposed between a superstructure and a substructure to support a load and a restrainer which strains the load carrier peripherally. The restrainer includes parallel restraining plates transverse to the direction of the load.

JP-A-59-179907 discloses a support having an elastic load carrier in which there is embedded along its periphery a restrainer to peripherally restrain the carrier.

DE-A-292182A shows an elastic support having a stack of metal plates with elastomer vulcanized between them. Peripheral support is provided.

The present invention has been accomplished with the actual conditions of said laminated rubber bearings $\underline{X}$, $\underline{Y}$ and $\underline{Z}$ taken into consideration and is intended to propose an earthquake-proofing device which solves said problems on the basis of a construction and principle basically different from those of said rubber bearings.

According to the present invention, there is provided an earthquake proofing device of peripherally restrained type comprising an elastic load carrier adapted to be disposed between a superstructure and a substructure to support a load and a restrainer which restrains the load carrier peripherally, characterised in that the restrainer has an aperture which extends through the restrainer in the direction of the load and in which the load carrier is disposed, in that said restrainer includes restraining members (13) laminated together in the direction of the load to develop high rigidity against tensile force, and in that said load carrier is formed of an

2

elastic, visco-elastic or viscous material selected from the group consisting of natural rubber and derivatives thereof, elastomers developing rubber-like visco-elasticity and highly damping rubbers.

In said earthquake-proofing device, the load carrier formed of an elastic, visco-elastic or viscous material is restrained by the surrounding restrainer, whereby it develops a load support capability due to vertical rigidity while retaining the high deforming capability due to elasticity, visco-elasticity or viscosity. And the restrainer and/or load carrier develops a vibration energy absorbing effect mainly by frictional damping. This vibration absorbing effect is also effective for slight vibration.

In addition, in the earthquake-proofing device of the invention, a vertical load is supported mostly by the load carrier, while energy absorption is effected mainly by frictional damping through the restrainer and/or load carrier; in this respect, the mechanism differs essentially from said lead-laminated rubber bearing $\underline{Y}$. The reason is that in the lead-laminated rubber bearing $\underline{Y}$, a vertical load is supported by the surrounding laminate of steel plates and thin rubber plates while energy absorption is effected by the plastic deformation of the lead.

Further, in the construction of the present inventive device, the point of action of restoring force coincides with the point of action of damping force, so that unnecessary torsional vibrations are not given to structures.

It is seen from the above that the present inventive device serving as a damper-integral type earthquake-proofing device develops the same performance as or higher performance than the conventional laminated rubber bearings $\underline{X}$, $\underline{Y}$ and $\underline{Z}$.

Since a columnar load carrier is restrained by the restrainer, it has become possible to utilize those kinds of materials for load carriers that it was not possible to use in the case of laminated construction.

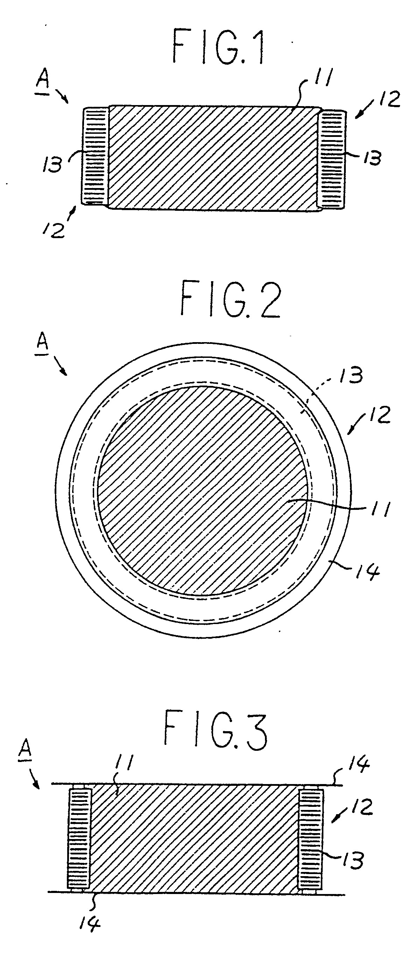

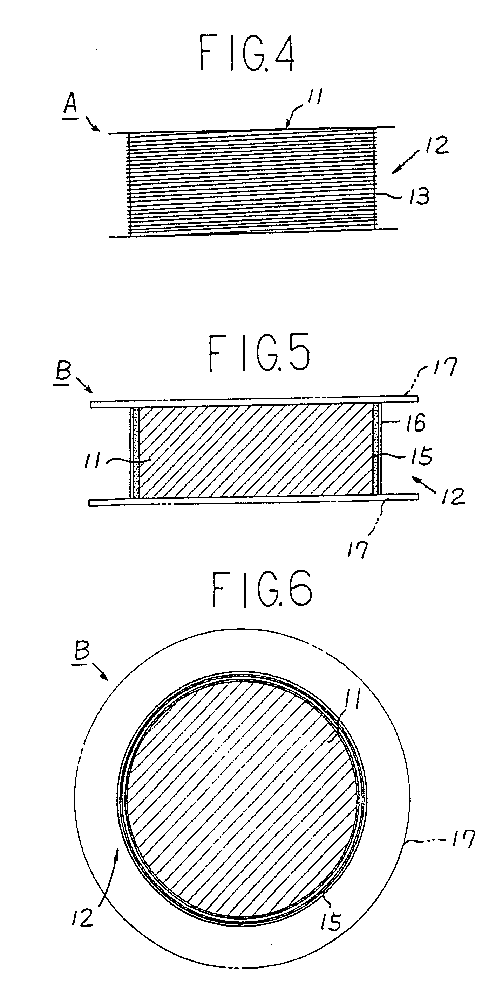

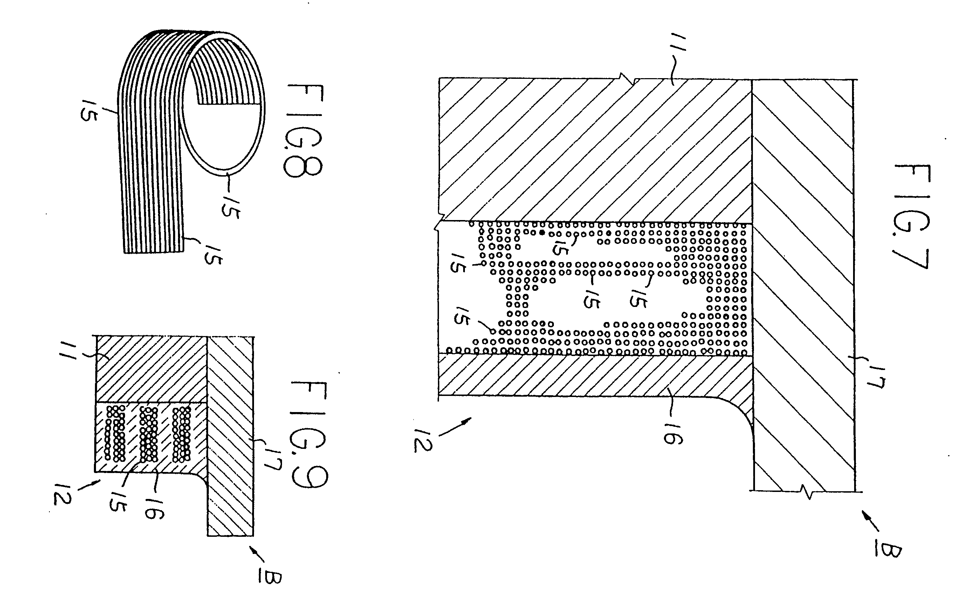

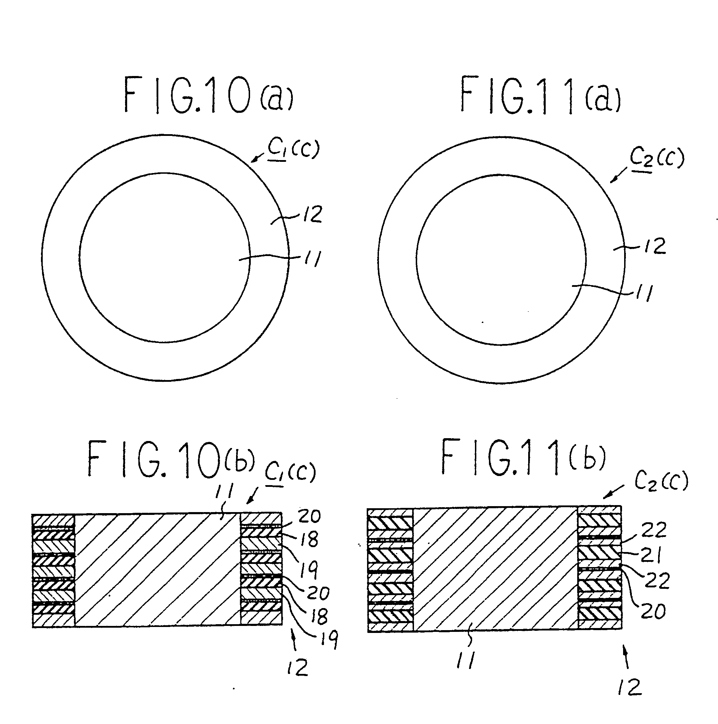

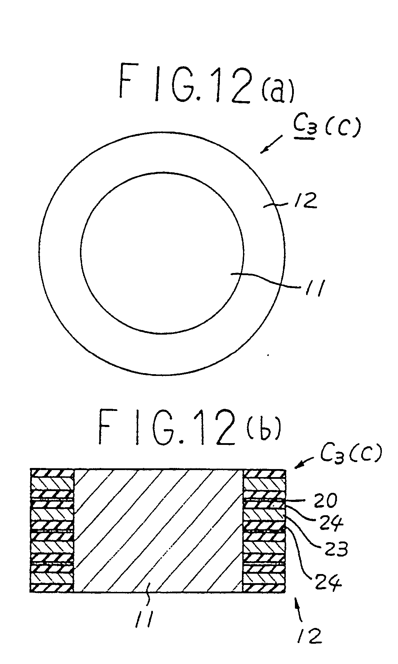

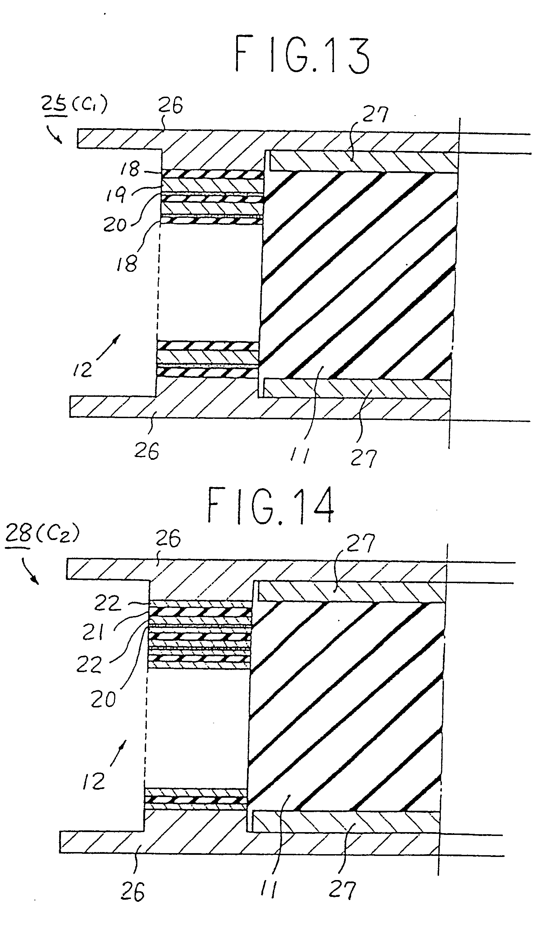

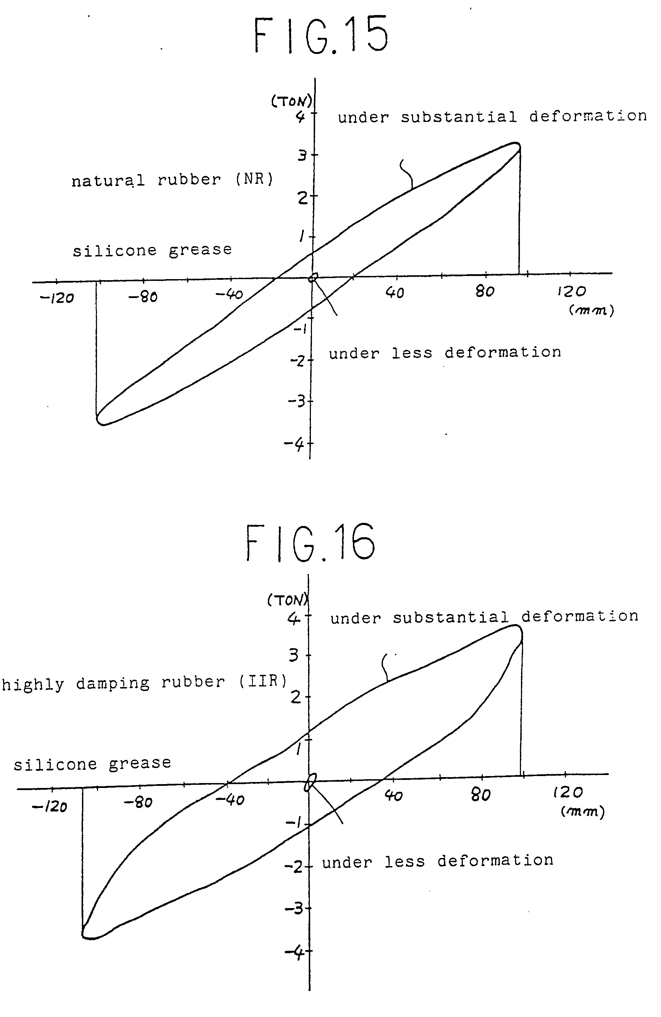

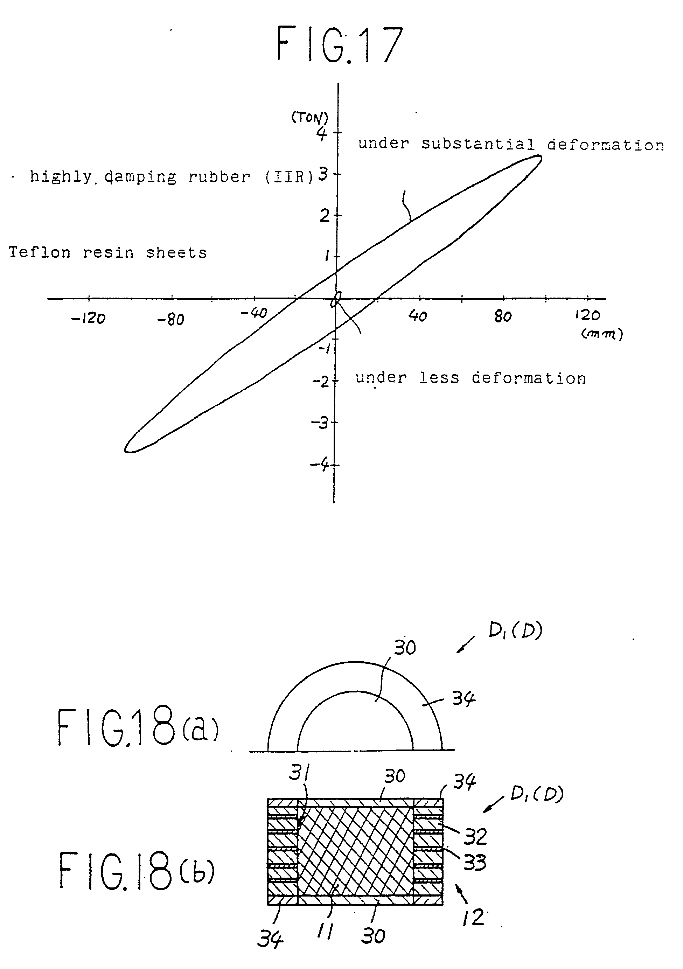

Figs. 1 through 4 are views showing an earthquake-proofing device $\underline{A}$ according to a first embodiment of the invention; Fig. 1 is a sectional view showing the basic construction; Figs. 2 and 3 are a plan view and a sectional view, respectively, showing an example of application; and Fig. 4 is a side view showing another example of application.

Figs. 5 through 9 are views showing an earthquake-proofing device $\underline{B}$ according to a second embodiment of the invention; Fig. 5 is a sectional view showing the basic construction; Fig. 6 is a plan view; Fig. 7 is a fragmentary enlarged sectional view of Fig. 5; Fig. 8 is a perspective view showing restraining wires; and Fig. 9 is a fragmentary sectional view showing another example of arrangement of the peripheral portion of the load carrier.

Figs. 10 through 17 are views for explaining an earthquake-proofing device $\underline{C}$ according to a third embodiment of the invention; Figs. 10 (a) and (b), Figs. 11 (a) and (b) and Figs. 12 (a) and (b) show three examples of the basic construction of the third embodiment, (a)'s being plan views and (b)'s being sectional views, Fig. 13 is a sectional view showing a manufacture example embodying the basic construction example $C_1$ shown in Fig. 10 and Fig. 14 is a sectional view showing a manufacture example embodying the basic construction example $C_2$ shown in Fig. 11. Figs. 15 through 17 are load-displacement curves obtained when the rubber-like material and anti-friction material for the load carrier are changed.

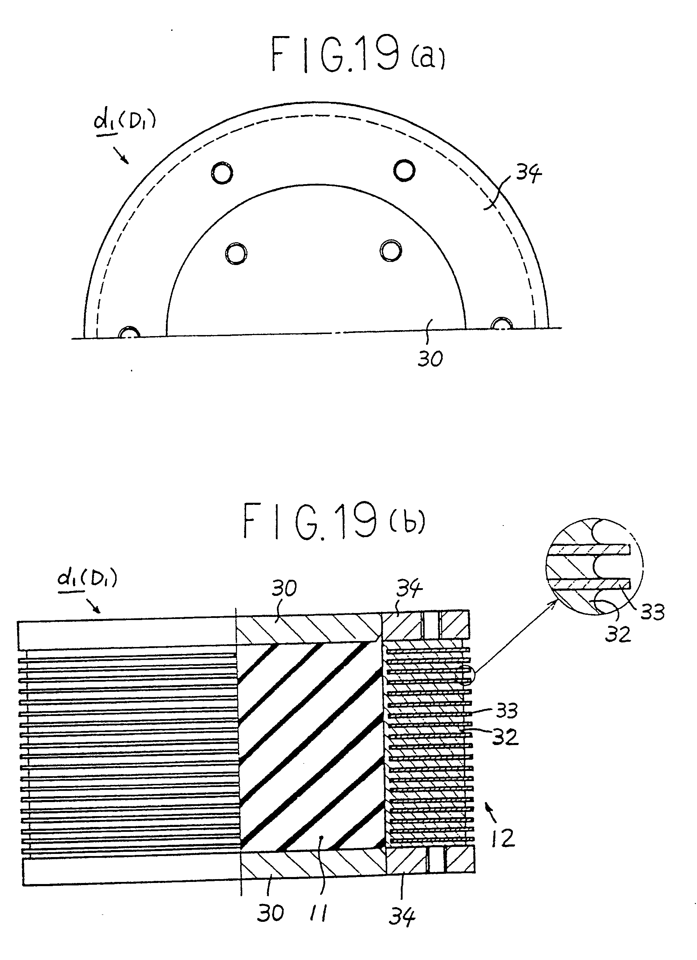

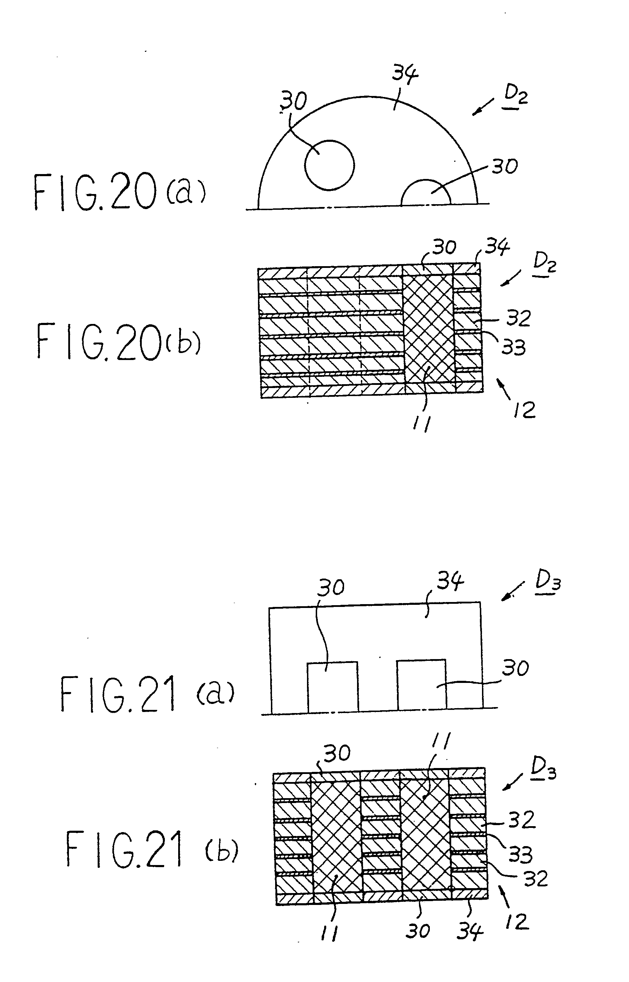

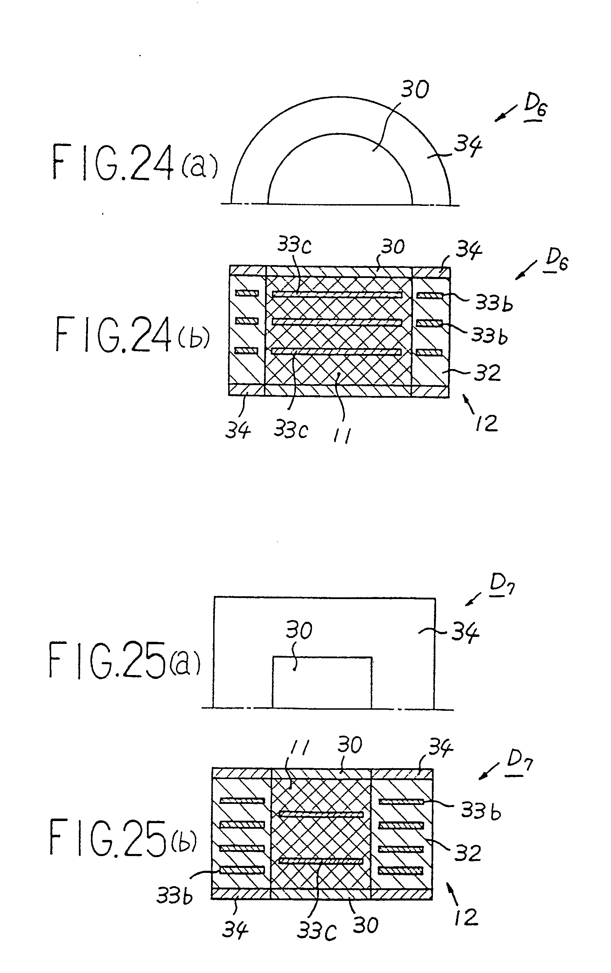

Figs. 18 through 25 are views showing an earthquake-proofing device $\underline{D}$ according to a fourth embodiment of the invention; Figs. 18 (a) and (b) are a plan view and a sectional view, respectively, showing a first construction example $D_1$, Figs. 19 (a) and (b) show a manufacture example $d_1$ of the first construction example $D_1$ shown in Figs. 18 (a) and (b), (a) being a plan view and (b) being a sectional view. Figs. 20 (a) and (b) through Figs. 25 (a) and (b) show second through seventh construction examples of the fourth embodiment, (a)'s being plan views and (b)'s being sectional views.

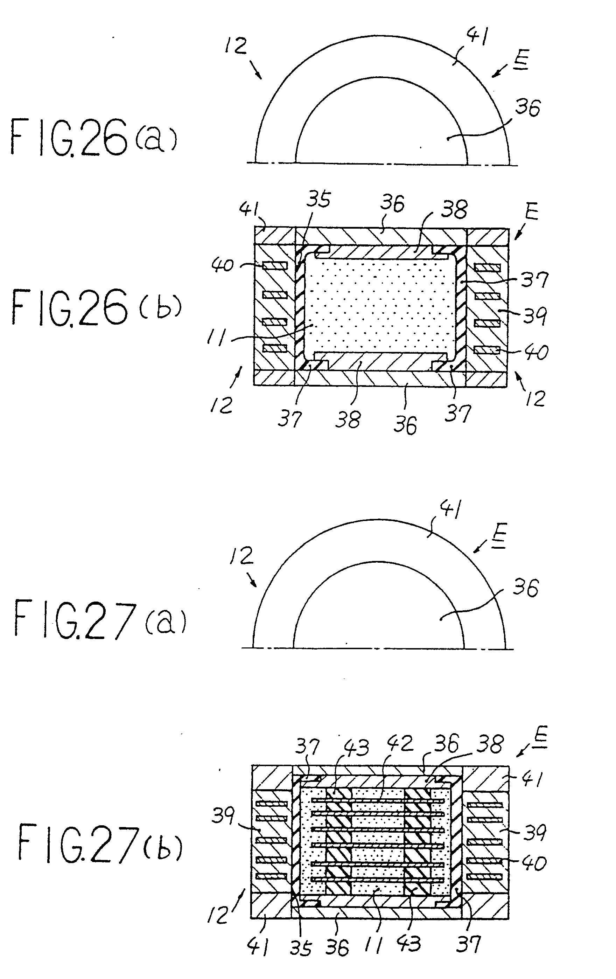

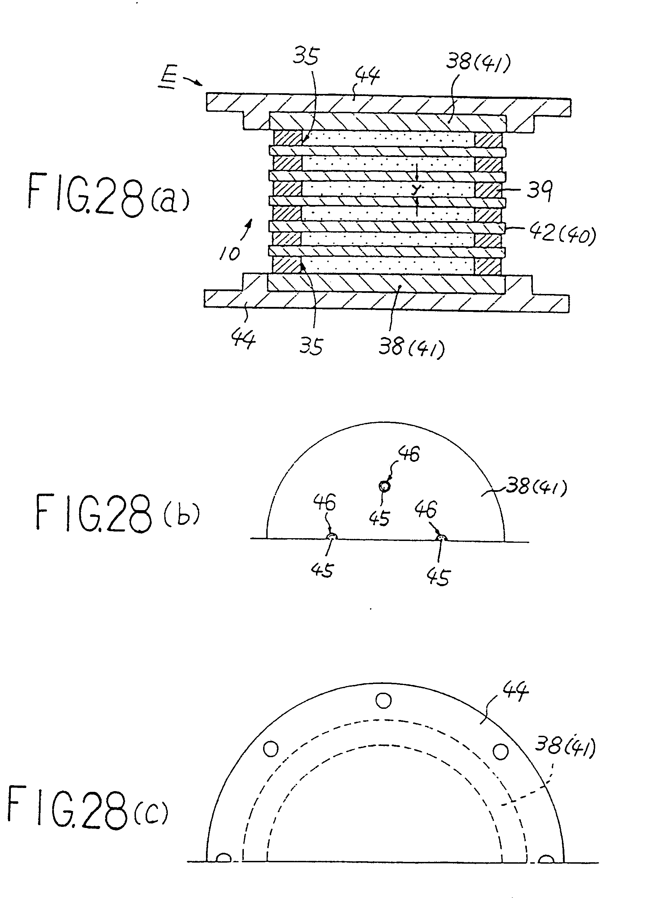

Figs. 26 through 28 are views for explaining an earthquake-proofing device $\underline{E}$ of peripherally restrained type according to a fifth embodiment of the invention; Figs. 26 (a) and (b) and Figs. 27 (a) and (b) show first and second arrangement examples, respectively, (a)'s being plan views and (b)s' being sectional views. Figs. 28 (a), (b) and (c) show a third arrangement example of the fifth embodiment, (a) being a sectional view, (b) being a plan view of an upper pressure receiving plate and (c) being a plan view of an outer plate.

Figs. 29 and 30 show prior art examples. Figs. 29 (a) and (b) show a laminated rubber bearing $\underline{X}$ or a highly damping laminated rubber bearing $\underline{Z}$, (a) being a plan view and (b) being a sectional view. Figs. 30 (a) and (b) show a lead-laminated rubber bearing $\underline{Y}$, (a) being a plan view and (b) being a sectional view, Fig. 31 is a load-displacement curve for the lead-laminated rubber bearing shown in Fig. 30.

The present inventive device has a number of embodiments corresponding to different forms of the construction of a restrainer. These will now be described in order.

First of all, a first embodiment which is the most basic type of the invention will be described with reference to Figs. 1 through 4.

An earthquake-proofing device $\underline{A}$ according to the first embodiment, as shown in Fig. 1 showing its section, comprises a load carrier 11 using a columnar rubber-like body which develops elasticity or viscoelasticity, and restraining plates 13 disposed therearound as restraining members constituting a restrainer 12,

The rubber-like body forming the load carrier 11 is formed into a column having any desired plan configu-

3

ration including a cylinder and a prism, and its material includes natural rubber and derivatives thereof, and elastomers developing rubber-like visco-elasticity, such as various synthetic rubbers and rubber-like plastics.

Further, since the rubber-like body, which is the load carrier 11, is singly used, such highly damping rubbers as nitrile-butadiene rubber, isobutylene-isoprene rubber, polynorbornene, and butyl halogenide, whose lamination has heretofore been hampered, can be used if necessary.

Disposed in laminate form around the periphery of the load carrier 11 using a rubber-like body are restraining plates 13 of high rigidity which are restraining members constituting the restrainer 12 for restraining outward bulging. Thereby, the load carrier 11 and the earthquake-proofing device A develop high vertical rigidity and great vertical load support capability and possess low horizontal rigidity and great horizontal deformability.

The restrainer 12 shown in Fig. 1 is constructed by simply stacking the restraining plates 13 in the form of a plurality of steel plates, but as in Fig. 4 showing an example of application of the first embodiment, a single or a plurality of steel plates may be made continuous in spiral form, making it possible to arbitrarily adjust the rigidity and damping performance of the earthquake-proofing device A.

As for the method of treating the restraining plates 13 for lamination, they may be directly laminated or they may be covered or laminated using rubber which is low in compression permanent strain.

Another example of applications of the first embodiment will now be described with reference to Figs. 2 and 3.

In this example of application, fixing plates 14 adapted to be fixed to a superstructure and a substructure are joined to the upper and lower surfaces of the earthquake-proofing device A of the first embodiment, that is, the upper and lower surfaces of the rubber-like body which is the load carrier 11.

Steel plates are mainly used for the fixing plates 14 as in the case of the restrainer 12.

The example of application shown in Fig. 2 is constructed by stacking a plurality of restraining plates 12 which are a plurality of steel plates to form a restrainer 12, while the example of application shown in Fig. 4 is constructed by spirally forming the restraining plates 13 as described above to form a restrainer 12.

Since the first embodiment is constructed by singly using a rubber-like body and disposing the restraining plates 13 in laminate form therearound to form a restrainer.12, the following effects can be attained.

(1) Particularly in the case where the restraining plates 13 are directly laminated, since the construction is simple, manufacture is easy and hence cost reduction is realized,

(2) When the restraining plates 13 placed one above another are disposed so that they rub each other during earthquake-proofing operation, vibration energy is absorbed by friction, so that a damping effect is obtained ; thus, even if the rubber-like body which is the load carrier 11 is natural rubber or the like, the device is a damper-integral type earthquake-proofing device.

(3) Further, in the case of a disposition in which the restraining plates 13 rub each other and also in the case of a disposition in which they do not rub each other, it is possible to use highly damping rubber in order to provide a damping effect to the rubber-like body itself. Further, the rigidity and damping performance of the device can be adjusted at will according to the laminated state of the restraining plates 13. For these reasons, a damper-integral type earthquake-proofing device can be designed in a wide range of characteristics.

(4) The rubber-like body which is the load carrier 11 has high durability and high fire resistance since it is protected around its outer periphery and at its upper and lower portions by steel plates or the like.

(5) Since the amount of material used is small, the device is reduced in weight and is easy to transport.

A second embodiment of the invention will now be described with reference to Figs. 5 through 9.

An earthquake-proofing device B according to the second embodiment, as shown in Figs. 5 and 6, is the same as the first embodiment in that a restrainer 12 for restraining outward bulging is disposed around the periphery of a load carrier 11 using a columnar rubber-like body.

The feature of the second embodiment is that the restrainer 12 is constructed of a number of restraining wires 15 which are restraining members wound in laminate form around the load carrier 11 continuously in the direction of the height.

Used for the restraining wires 15 which are restraining members are PC steel wires or wire cords. The restraining wires 15, as shown in Fig. 7 which is a fragmentary enlarged view of the load carrier 11, are disposed in laminate form in the direction of the height and side by side in the horizontal direction. Fig. 8 shows how the restraining wires 15 are assembled. The restraining wires 15 may each be spirally wound so that they are continuous with each other, whereby the rigidity and damping performance of the earthquake-proofing device B can be adjusted at will and the earthquake-proofing device B can be constructed as a damper-integral type, as needed.

The restraining wires 15, as shown in Fig. 7, are protected by being externally covered with an elastic body 16, made of natural rubber or synthetic rubber, which is low in compression permanent strain. The elastic body 16 is integrated with the restraining wires 15 by vulcanization adhesion.

Fig. 9 shows an embodiment wherein groups of restraining wires 15 and an elastic body 16 are disposed in laminate form around a load carrier 11 alternately in the vertical direction.

When the earthquake-proofing device B arranged in the manner described above is used, fixing plates 17 adapted to be fixed to the superstructure and substructure, respectively, are joined to the upper and lower surfaces of the load carrier 11, as shown in Fig. 5.

Since the second embodiment, as described above, is constructed by singly using a rubber-like body as a load carrier and restraining said rubber-like body by a number of restraining wires 15 which are restraining members disposed therearound, the same effect as that of the first embodiment can be obtained.

In the first and second embodiments, when the restraining plates or wires are vertically independent, since vibration energy is absorbed by their frictional energy, the central rubber-like body may be of any kind, though it is preferable that the central rubber-like body have a highly damping property if it is fixed by a rubber-like elastic body which is low in compressive permanent strain.

A third embodiment of the invention will now be described with reference to Figs. 10 through 17.

An earthquake-proofing device C according to the third embodiment of the invention is a developed form of the earthquake-proofing device A according to the first embodiment.

In the earthquake-proofing device A according to the first embodiment, in the case where a horizontal damping effect is provided by dynamic friction between the restraining plates 13 which are restraining members constituting the restrainer 12, vertical minor vibrations attended with noise are produced, a condition undesirable for an earthquake-proofing device. These vibrations become the more severe, the larger the difference between static and dynamic frictions. Thus, the third embodiment provides a concrete arrangement capable of eliminating the vertical vibrations while effectively developing the damping effect due to friction.

First of all, the basic concept of the earthquake-proofing device C according to the third embodiment will be described below,

Figs. 10 through 12 show three basic arrangement examples $C_1$, $C_2$ and $C_3$ of the earthquake-proofing device C according to the third embodiment, said examples differing from each other in the construction of a restrainer 12 disposed in laminate form around a load carrier 11 using a columnar rubber-like body. In the case where the columnar rubber-like body which is a load carrier 11 centrally disposed for supporting a vertical load from a structure uses highly damping rubber, it is preferable that the latter be such that the loss (TAN δ) at–10-40°C under a dynamic strain of 0.5% at 0.5 Hz is in the range of 0,1-1.5. If the loss (TAN δ) exceeds 1.5, vertical vibration-proofness at above 10 Hz is degraded, while if it is less than 01, this does not contribute much to damping performance in a horizontal shear direction.

The respective constructions of the restrainers 12 in said basic arrangement examples $C_1$, $C_2$ and $C_3$ will now be described in order.

The restrainer 12 in the first arrangement example $C_1$ shown in Figs. 10 (a) and (b) is in the form of a laminate wherein annular rubber-like elastic bodies 18 which are low in compressive permanent strain and annular restraining plates 19 of steel which are restraining members are fixed together face to face and laminated with anti-friction members 20 interposed therebetween. The term "fixing" includes plying, vulcanization adhesion, etc.

The restrainer 12 in the second arrangement example $C_2$ shown in Figs. 11 (a) and (b) is constructed such that annular restraining plates 22 of steel which are restraining members are fixed one by one to the front and back surfaces of annular rubber-like elastic plates 21 which are low in compression permanent strain to form assemblies of three-layer construction, which are then laminated with anti-friction members 20 interposed therebetween.

The restrainer 12 in the third arrangement example $C_3$ shown in Figs. 12 (a) and (b) is constructed such that annular rubber-like elastic plates 24 which are low in compression permanent strain are fixed one by one to the front and back surfaces of annular restraining plates 23 of steel which are restraining members to form assemblies of three-layer construction, which are then laminated with anti-friction members 20 interposed therebetween.

As for the restraining elastic plates 19, 22 and 23 which are restraining members, they have only to have high rigidity and high strength against breakdown, and materials other than steel may be used.

As for the rubber-like elastic plates 18, 21 and 24 which are low in compression permanent strain, any elastic material will do so long as it has the same properties as rubber. The amount of compression permanent strain desirable for causing the strainer 12 to develop its effective function is 35% or less, particularly 20% or less at 70°C-22 HR heat treatment on the basis of JIS K6301.

As for the anti-friction members 20, any material may be used so long as it reduces the difference between static and dynamic frictions between restraining plates ;

for example, a member impregnated with such a resin low in friction coefficient as silicone grease or Teflon or lubricant is used. The mounting of these anti-friction members 20 is effected by applying them, through coating or covering, to the slide surfaces of rubber-like elastic plates or by fixing them to said slide surfaces, depending upon their properties.

In addition, the restrainer 12 is not limited to the above arrangement examples ; what is essential is that rubber-like elastic plates having s spacer function are fixed to hard restraining plates which are restraining members and that these are laminated with anti-friction members interposed therebetween. For example, if the rubber-like body which is a load carrier 11 is prismatic, the planar shape of the restrainer 12 will be polygonal correspondingly thereto. Further, the restrainer 12 may be a laminate form constructed by spirally winding restraining plates having rubber-like elastic plate fixed thereto.

Manufacture examples embodying said basic arrangement examples of the third embodiment will be described with reference to Figs. 13 and 14, and their characteristics will be explained,

An earthquake-proofing device 25 shown in Fig. 13 which is a first manufacture example of the third embodiment corresponds to the basic arrangement example $C_1$ previously described with reference to Fig. 10, and in which a columnar rubber-like body which is a load carrier 11 and a restrainer 12 which surrounds it are placed between and fixed to fixing plates 26 which are fixed to the superstructure and substructure.

The load carrier 11 using a rubber-like body has pressure receiving plates 27 embedded therein and bonded thereto on its opposite end surfaces, the material being natural rubber or isobutylene-isoprene rubber whose tan 6 is about 0.3. The thickness ratio of the restraining plates 19 to rubber-like elastic plates 18 which constitute the restrainer 12 is 2 : 1, and silicone grease having a viscosity of 300,000 cSc (at 25°C) or Teflon resin sheets are used as the anti-friction members 20.

An earthquake-proofing device 28 shown in Fig. 14 which is a second manufacture example of the third embodiment corresponds to the basic arrangement example $C_2$ previously described with reference to Fig. 11, and it differs from what is shown in Fig. 4 in that the restrainer 12 is formed by laminating three-layer assemblies each comprising two restraining plates 22 and a rubber-like elastic body 21 interposed therebetween. In addition, the thickness ratio of each restraining plate 22 to each rubber-like elastic plate 21 is 1 : 1.

Load-displacement curves obtained by measuring the first manufacture example shown in Fig. 13 are shown in Figs. 15, 16 and 17. Fig. 15 shows characteristics where the material of the rubber-like body which is the load carrier 11 is natural rubber (NR) and where the anti-friction members 20 are in the form of silicone grease. Fig. 16 shows characteristics where the material of the rubber-like body which is the load carrier 11 is highly damping rubber (IIR) and where the anti-friction members 20 are in the form of silicone grease. Fig. 17 shows characteristics where the material of the rubber-like body which is the load carrier 11 is highly damping rubber and where the anti-friction members 20 are in the form of Teflon resin sheets. In addition, in the earthquake-proofing device 28 which is the second manufacture example, when the materials of the rubber-like body 11 and anti-friction members 20 are selected in the same manner as in the examples described above, the same characteristics as those described above were obtained. When these are compared with the load-displacement curve for the lead-laminated rubber, bearing Y, it is seen that the rigidity with respect to slight displacement is low and that a vibration-proofing effect is developed for slight vibration. These comparisons in terms of numerical valves are as shown in Table 1.

Table 1

| | Shear rigidity (amount of displacement) | | Damping constant h (displacement ±100mm) |
|---|---|---|---|
| | 0.5HZ ± 100 TON/cm | 0.5HZ ± 2 TON/cm | |
| 1. First manufacture example (Fig. 15) (silicone grease applied + NR parent body) | 0.33 | 0.5 | 0.12 |
| 2. First manufacture example (Fig. 16) (silicone grease applied + IIR parent body) | 0.34 | 1.0 | 0.17 |
| 3. First manufacture example (Fig. 17) (Teflon sheet stuck + IIR parent body) | 0.33 | 0.7 | 0.11 |
| 4. Comparative example (Fig. 28) (lead-laminated rubber bering) | 0.42 | 3.0 | 0.19 |

-21-

That is, in the earthquake-proofing device C according to the third embodiment, the shear rigidity at 2-mm horizontal displacement is 1/3-1/6 of that in the lead-laminated rubber bearing Y, and it is seen that the device exerts good damping performance when encountering slight vibration. Further, in each example, the damping constant h, which is proportional to the area surrounded by the hysteresis curve, exceeds a value of 0.1 generally demanded of earthquake-proofing devices. Particularly, the manufacture example (Fig. 16) using both silicone grease and highly damping rubber provided good results, its value exceeding 0.17 because of addition of a damping action brought about by the viscosity of the silicone grease.

As for the vertical/shear (horizontal) rigidity ratio, kv/kh, which is a basic characteristic necessary to earthquake-proofness, a comparison between said manufacture example (Fig. 15) using natural rubber and silicone grease and the laminated rubber bearing X shown in Fig. 29 using natural rubber is shown in Table 2.

# Table 2

|  | Vertical rigidity $K_V$ | Shear rigidity $K_H$ | Ratio $K_V / K_H$ |
|---|---|---|---|
| 1. Embodiment A (silicone grease applied + NR parent body) | TON/cm 800 | TON/cm 0.33 | 2400 |
| 2. Comparative example (laminated rubber bearing) | 820 | 0.60 | 1370 |

EP 0 287 683 B1

According to Table 2, the vertical load carrying capacities are approximately equal, and the third embodiment of the invention is lower in horizontal shear rigidity kh and its rigidity ratio kv/kh is about 2 times as high. From this, it can be said that the earthquake-proofing capacity is higher than that of the prior art.

From the above comparison based on the data shown in Tables 1 and 2, it has been clarified that the earthquake-proofing device $\underline{C}$ according to the third embodiment of the invention has performance equal to or greater than that of the conventional laminated rubber bearing.

A fourth embodiment of the invention will now be described with reference to Figs. 18 through 25.

An earthquake-proofing device $\underline{D}$ according to the fourth embodiment of the invention is constructed such that in the case where highly damping rubber, such as isobutyl-isoprene rubber or Polynorbornene, is used for a rubber-like body used as a load carrier 11, the insufficiency of the restoring force of the highly damping rubber is compensated by a restrainer 12, whereby the range of selection of highly damping rubbers is broadened.

First, a typical example of an earthquake-proofing device $\underline{D}$ according to the fourth embodiment will be referred to as a first construction example $D_1$ and described in detail.

In the first construction example $D_1$, as shown in Figs. 18 (a) and (b), a load carrier 11 of highly damping rubber held between upper and lower pressure receiving plates 30 is inserted in a through-hole 31 vertically formed in a restrainer 12. The restrainer 12 is constructed by alternately sticking rubber-like elastic bodies 32 low in compression permanent strain and annular hard bodies in the form of steel plates or the like which are restraining members and fixing them together in laminate form. In addition, the separate provision of annular pressure receiving plates 34 on the upper and lower surfaces of the restrainer 12 is in consideration of convenience of assembly, and said pressure receiving plates 34 may be integrated with the pressure receiving plates 30 in the form of rubber-like bodies.

A concrete manufacture example $d_1$ of this first construction example $D_1$ will now be described with reference to Figs. 19 (a) and (b).

A columnar load carrier 11 using highly damping rubber is held between and fixed to pressure receiving plates 30. Rubber-like elastic bodies 32 in a restrainer 12 are joined at their inner surfaces to and integrated with the outer peripheral surface of the load carrier 11, while hard bodies 33 which are restraining members project only beyond the outer periphery of the restrainer 12.

For this highly damping rubber used for the load carrier 11, use is made of polynorbornene rubber having a tan δ of about 0.8 at a temperature of 25°C and a frequency of 0,5 Hz, and for the rubber-like elastic bodies 32 low in compression permanent strain constituting the restrainer 12, use is made of natural, rubber (NR).

A comparison of the characteristics obtained by said concrete example $d_1$ with those of the conventional. laminated rubber bearing $\underline{X}$ shown in Fig. 29 and of the lead-laminated rubber bearing $\underline{Y}$ is shown, in Table 3.

Table 3

| | Vertical compression rigidity static load 35 TON dynamic load ± 5TON 10HZ | Horizontal shear rigidity vertical load 35 TON | | Damping constant at ±100mm,0.5HZ |
| | | Dynamic displacement ± 5mm0.5HZ | Dynamic displacement ±100mm0.5HZ | |
|---|---|---|---|---|
| Manufacture example d₁ | 320 TON/cm | TON/cm 0.44 | TON/cm 0.27 | 0.13 |
| Comparative example X | 270 | 0.45 | 0.28 | 0.022 |
| Comparative example Y | 520 | 1.15 | 0.50 | 0.15 |

In Table 3, a look at the damping performance shows that the damping constant of the earthquake-proofing device $\underline{D}$ according to the manufacture example $d_1$ is about 0.13, indicating higher damping performance than that of the laminated rubber bearing $\underline{X}$ which is a comparative example. This value exceeds a damping constant of 0.10, which is generally required, and is desirable for practical use.

Further, the initial rigidity during shear deformation against slight vibration, which has been a problem inherent in the lead-laminated rubber bearing, is reduced to as low a value as 0.44 in contrast to 1,15 TON/cm provided by the comparative example $\underline{Y}$ ; thus, it is seen that the vibration-proofing characteristic against slight vibration is improved to a great extent.

In addition, in order to check the durability of the highly damping rubber used for the load carrier 11, the earthquake-proofing device $D_1$ according to the manufacture example $d_1$ of the fourth embodiment shown in Fig, 19 was subjected to 360 times of deformation under conditions including a frequency of 0.2 Hz and an amplitude of+107 mm, and then the highly damping rubber which was the load carrier 11 was taken out of the restrainer 12 and its surface condition was observed but there was found no change on its surface as compared with what it was before the test.

Besides this, the earthquake-proofing device $\underline{D}$ of the fourth embodiment has many construction examples, which will be described in order.

Constructions where the highly damping rubber which is a load carrier 11, is vertically extended through the restrainer 12, as in the case of the first construction example $D_1$ shown in Fig. 18, include a second construction example $D_2$ shown in Figs. 20 (a) and (b) and a third construction example $D_3$ shown in Figs. 21 (a) and (b).

These construction examples show that a plurality of highly damping rubber bodies may be inserted as load carriers 11 and that they may take any shape, such as cylinders and prisms.

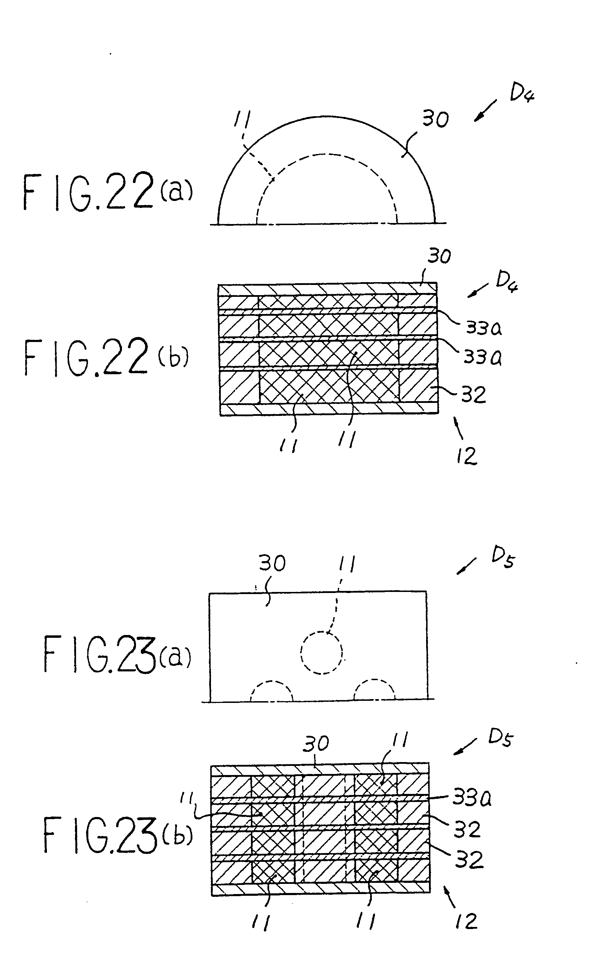

As for an arrangement in which a plurality of highly damping rubber bodies serving as load carriers 11 are disposed as they are vertically completely divided, there are a fourth construction example $D_4$ shown in Figs. 22 (a) and (b) and a fifth construction example $D_5$ shown in Fig. 23. These construction examples $D_4$ and $D_5$ use unapertured hard bodies 33a as restraining members, thereby vertically completely dividing the highly damping rubber which is a load carrier 11. The fourth construction example $D_4$ uses a plurality of highly damping rubber bodies in the form of flat plates as load carriers 11. The fifth construction example $D_5$ uses a restrainer 12 in the form of a quadrangular prism and four cylindrical highly damping rubber bodies serving as load carriers 11 disposed in each plane. As for an arrangement in which vertically spaced partitions for the load carriers 11 are separate from the hard bodies 33b which are restraining members and are provided by partition plates 33c embedded in the highly damping rubber, there are sixth construction example $D_6$ shown in Figs. 24 (a) and (b) and a seventh construction example $D_7$ shown in Figs. 25 (a) and (b). The differences between the sixth and seventh construction examples are in whether the shape is cylindrical or quadrangularly prismatic and in whether the partition plates 33c are at the same levels as the hard bodies 33b which are restraining members or they are disposed at alternate levels. Further, these sixth and seventh construction examples $D_6$ and $D_7$ differ from the first through fifth construction examples $D_1$ through $D_5$ in that the hard bodies 33b are completely embedded in the restrainer 12.

The first through seventh construction examples $D_1$ through $D_7$ which are the fourth embodiment of the invention have so far been described, but it is to be pointed out that the fourth embodiment can be implemented in a wide variety of constructions by combining, in different ways, the features of the various parts appearing in the above construction examples.

For example, in the first through fifth construction examples, the hard bodies 33 and 33a which are restraining members project beyond the restrainer 12, and, in contrast, in the sixth and seventh construction examples they are completely embedded ; each of the forms my be employed in the respective construction examples.

In addition, in the fourth embodiment, for example, the desirable amount of compression permanent strain of the rubber-like elastic body 32 used in the restrainer 12 is 35% or less at 70°C-22HR heat treatment based on JIS-K6301, this value being necessary to impart an appropriate restoring force to the restrainer 12. Particularly, 20% or less provides good results.

As for highly damping rubbers used in load carriers 11, those are preferable whose loss (TAN δ) at 0.5 Hz and at a dynamic strain of 0,5% ranges from 01. to 1.5. The reason is that if the loss (TAN δ) exceeds 1.5, the vertical vibration-proofness at 10 Hz and more is degraded and that if it is less than 0.1, this does not contribute so much to improving damping performance in the horizontal shear direction.

The earthquake-proofing device $\underline{D}$ of the fourth embodiment has its restrainer 12 integrated and its load carrier 11 made uniform throughout the peripheral surface and elastically restrained in a stabilized state, so that the device is characterized in that highly damping rubber high in compression permanent strain can be used in a stabilized state free from creep phenomena and in that a suitable horizontal restoring force can be imparted to the earthquake-proofing device by the elastic force of the restrainer 12.

The earthquake-proofing device D of the fourth embodiment of the invention essentially differs in mechanism from the conventional lead-laminated rubber bearing Y shown in Fig. 30 in that the vertical load is mostly supported by the highly damping rubber which is the load carrier 11 and in that energy absorption is effected mainly by intermolecular friction in the highly damping rubber. In the lead-laminated rubber bearing Y, the vertical load is supported by the peripherally disposed laminate of steel plates and thin rubber plates and energy absorption is effected by plastic deformation of the lead.

A fifth embodiment of the invention will now be described with reference to Figs. 26 through 28.

An earthquake-proofing device E according to the fifth embodiment uses viscous fluid as a load carrier 11, wherein high vertical rigidity is imparted to the viscous fluid by restraining outward bulging while a restoring force associated with horizontal deformation is imparted to a rubber-like elastic body which is low in compression permanent strain and which constitutes the restrainer.

And a damping action is provided mainly by intermolecular friction in the viscous fluid.

Typical forms of the earthquake-proofing device E of peripherally restrained type according to the fifth embodiment will now be described in order as first through third arrangement examples.

A first arrangement example, as shown in Figs. 26 (a) and (b), has viscous fluid, which is a load carrier 11, enclosed in a cavity 35 defined vertically of a cylindrical restrainer 12 with said viscous fluid placed between upper and lower pressure receiving plates 36. In addition, to ensure perfection of enclosure of the viscous fluid which is a load carrier 11, an elastic bag 37 is used and fixed in position by using bag fixing plates 38. This restrainer 12 is in the form of a laminate formed by fixing, as by vulcanization adhesion or sticking, a rubber-like elastic body 39 low in compression permanent strain and annular or spiral hard restraining members 40. Wires, such as steel wires, may be employed as restraining members. In addition, annular pressure receiving plates 41 are provided on the upper and lower surfaces of the restrainer 12 in consideration of convenience of assembly ; said pressure receiving plates 41 may be integrated with the receiving plates 36 for the viscous fluid.

A second arrangement example of the earthquake-proofing device E of peripherally restrained type according to the fifth embodiment of the invention will now be described.

A second arrangement example shown in Figs. 27 (a) and (b) is a modification of the embodiment shown in Figs. 26 (a) and (b), wherein a plurality of viscous fluid shear resistance plates 42 are disposed in parallel to each other to control the flow of the viscous fluid so as to improve damping effect. The viscous fluid shear resistance plates 42 are connected together by a rubber-like elastic body 43 with a predetermined spacing defined between adjacent plates and are supported by a bag fixing flange 38. This embodiment enables the shear resistance force of the viscous fluid shear resistance plates to be effectively transmitted to the upper and lower pressure receiving plates 42 through the rubber-like elastic body 43, thus maintaining the clearances of the viscous fluid shear resistance plates 42 at a constant value to improve the damping effect.

A third arrangement example of the earthquake-proofing device E of peripherally restrained type according to the fifth embodiment of the invention is shown in Figs, 28 (a), (b) and (c). The third arrangement example shows that viscous fluid which is a load carrier 11 may be enclosed in a plurality of chambers and that the viscous fluid shear resistance plates 42 may be integrated with the hard restraining members 40. This third arrangement example has viscous fluid, which is a load carrier 11, enclosed directly in a restrainer 12. This is because if the cavity 35 in the restrainer 12 is made sealable, then the elastic bag 37 is not absolutely necessary.

In addition, in the third arrangement example, outer plates 44 adapted to be joined to a structure and a foundation are fitted on pressure receiving plates 36. The upper pressure receiving plate 36 is formed with enclosing holes 45 for enclosing the viscous fluid which is a load carrier 11. The enclosing holes 45 are closed by bolts 46 screwed thereinto. Further, each viscous fluid shear resistance plate 42 is formed with an unillustrated through-hole to make it possible to inject viscous fluid which is to become a load carrier 11. The arrangement of this third arrangement example is based on the same concept of the second arrangement example. That is, the viscous fluid is sealed in and moreover the viscous fluid shear resistance plates 42 are installed with a small spacing y defined therebetween to enhance the intermolecular motion so as to improve the damping effect. This construction is characterized in that the smaller the spacing y, the greater the damping effect corresponding to the velocity gradient dv/dy between the viscous fluid shear resistance plates 42.

So far, the first through third arrangement examples of the earthquake-proofing device E which is the fifth embodiment have been described, but it is to be pointed out that the fifth embodiment can be implemented in a wide variety of constructions besides the above-described arrangement examples by combining, in different ways, the features of the various parts appearing in the first through third arrangement examples.

For example, in the first and second arrangement examples, the hard restraining members 40 are completely embedded in the restrainer 12, and, in contrast, in the third arrangement example, they project ; each of the forms may be employed in the respective embodiments.

In addition, the desirable amount of compression permanent strain of the rubber-like elastic body 39 used in the strainer 12 is 35% or less at 70°C-22HR heat treatment based on JIS-K6301, this value being necessary to impart an appropriate restoring force to the restrainer 12. Particularly, 20% or less provides good results.

Further, the greater the dynamic viscosity of the viscous fluid used as a load carrier 11, the higher the damping effect, but a viscous fluid having 1,000 st-100,000 st is preferable as it provides suitable damping performance.

The earthquake-proofing device of the present invention uses a non-laminated elastic body, visco-elastic body or viscous body to develop high vertical load support performance, making it possible to eliminate the drawbacks of conventional laminated rubber bearings ; and supersedes the latter.

Particularly, since the earthquake-proofing device of the invention does not use a material having high initial rigidity, such as lead, it also has a vibration-proofing property for slight vibration and offers a wide range of selection of restrainers and load carriers, making it possible to design characteristics in a wide range, as desired. Therefore, the invention is suitable for earthquake- and vibration-proofing buildings ; for earthquake- and vibration-proofing floors, and for earthquake- and vibration-proofing power transmission equipment and general equipment as well.

## Claims

1. An earthquake proofing device of peripherally restrained type comprising an elastic load carrier (11) adapted to be disposed between a superstructure and a substructure to support a load and a restrainer (12) which restrains the load carrier peripherally, characterised in that the restrainer (12) has an aperture which extends through the restrainer (12) in the direction of the load and in which the load carrier (11) is disposed, in that said restrainer (12) includes restraining members (13) laminated together in the direction of the load to develop high rigidity against tensile force, and in that said load carrier (11) is formed of an elastic, visco-elastic or viscous material selected from the group consisting of natural rubber and derivatives thereof, elastomers developing rubber-like visco-elasticity and highly damping rubbers.

2. An earthquake-proofing device as set forth in claim 1, wherein said restraining members (13) are rigid plates.

3. An earthquake-proofing device as set forth in claim 2, wherein said rigid plates (13) are separate annular plates stacked one above the other to form said restrainer (12).

4. An earthquake-proofing device as set forth in claim 2, wherein said rigid plates (13) are a strip of plate spirally wound to form said restrainer (12).

5. An earthquake-proofing device as set forth in claim 2, wherein said load carrier (11) is of highly damping rubber, and a rubber which is low in compression permanent strain is interposed between the adjacent restraining plates (13).

6. An earthquake-proofing device as set forth in claim 5, wherein the loss of said highly damping rubber (TAN δ) at O.5Hz and at a dynamic strain of 0.5% ranges from 0.1 to 1.5.

7. An earthquake-proofing device as set forth in claim 5, wherein the amount of compression permanent strain of said rubber between the restraining plates is 35% or less at 7O°C-22Hr heat treatment.

8. An earthquake-proofing device as set forth in claim 5, wherein hard plates alternate in said load carrier with said rubber, said hard plates and said rubber being bonded together.

9. An earthquake-proofing device as set forth in claim 8, wherein said hard plates extend horizontally through said load carrier and divide said load.

10. An earthquake-proofing device as set forth in claim 1, wherein said restraining members are in the form of wire.

11. An earthquake-proofing device as set forth in claim 10, wherein a plurality of separate wire rings are concentrically stacked, one above the other, to form said restrainer.

12. An earthquake-proofing device as set forth in claim 10, wherein a length of wire is spirally wound to form said restrainer.

13. An earthquake-proofing device as set forth in claim 10, wherein restraining wires and an elastic body are disposed in laminate from around said load carrier, said restraining wires and said elastic body alternating in the vertical direction.

14. An earthquake-proofing device as set forth in claim 1 or claim 6, wherein said load carrier is of highly damping rubber and said restraining members include restraining plates and elastic plates which are low in compressive permanent strain, with antifriction members between selected plates, selected from said restraining plates and said elastic plates.

15. An earthquake-proofing device as set forth in claim 14, wherein said antifriction members are of a material of low friction coefficient.

16. An earthquake-proofing device as set forth in claim 1, wherein said load carrier is a viscous fluid enclosed within said restrainer.

17. An earthquake-proofing device as set forth in claim 16, wherein shear resistance plates extend horizontally through said viscous fluid.

18. An earthquake-proofing device as set forth in claim 16, wherein said fluid has viscosity of from 1,000st-100,000st.

19. An earthquake-proofing device as set forth in claim 14, wherein one of said selected plates is selected from said restraining plates and the other of said selected plates is selected from said elastic plates or said selected plates are selected from said restraining plates, and said selected plates are disposed face-to-face and said antifriction member is between said face-to-face plates, or said selected plates are selected from said elastic plates.

20. An earthquake-proofing device as set forth in claim 15 or claim 19, wherein said antifriction members are of a low friction coefficient material impregnated with a lubricant selected from the group consisting of silicone grease, PTFE and low friction coefficient resin lubricants.

21. An earthquake-proofing device as set forth in claim 1, wherein said elastomers developing rubber-like visco-elasticity are selected from the group consisting of synthetic rubbers and rubber-like plastics.

22. An earthquake-proofing device as set forth in any of claims 1 to 21, wherein said highly damping rubbers are selected from the group consisting of nitrile-butadiene rubber, isobutylene-isoprene rubber, polynorbornene and butyl halogenide rubber.

## Ansprüche

1. Ein erdbebensicherndes Gerät der Type, die umfangsgehalten bzw. -gedämpft ist, mit einem elastischen Lastträger (11) zum Einsetzen zwischen einer Aufbaustruktur und einer Stützstruktur, um eine Last zu stützen, mit einem Halter bzw. Dämpfer (12), der den Lastträger am Umfang hält und dämpft, dadurch **gekennzeichnet**, daß der Halter bzw. Dämpfer (12) eine Öffnung aufweist, die sich in Lastrichtung durch den Halter bzw. Dämpfer (12) erstreckt und in der der Lastträger (11) angeordnet ist, daß der Halter bzw. Dämpfer (12) haltende Dämpfungsglieder (13) einschließt, die in Lastrichtung zusammenlaminiert sind, um eine hohe Steifigkeit gegenüber einer Stauchkraft zu entwickeln, und daß der Lastträger (11) aus einem elastischen visko-elastischen oder viskosen Material geformt ist, das aus der Gruppe ausgewählt ist, die aus natürlichem Gummi und seinen Derivaten, Elastomeren, die gummiähnliche Visko-Elastizität entwickeln, und aus stark dämpfenden Gummisorten besteht.

2. Ein erdbebensicherndes Gerät nach Anspruch 1, bei dem die haltenden Dämpfungsglieder (13) steife Platten sind.

3. Ein erdbebensicherndes Gerät nach Anspruch 2, bei dem die steifen Platten (13) voneinander getrennte Kreisringplatten sind, die übereinander gestapelt sind, um den Halter bzw. Dämpfer (12) zu bilden.

4. Ein erdbebensicherndes Gerät nach Anspruch 2, bei dem die steifen Platten (13) ein Plattenstreifen sind, der schraubenlinienförmig gewunden ist, um den Halter bzw. Dämpfer (12) zu bilden.

5. Ein erdbebensicherndes Gerät nach Anspruch 2, bei dem der Lastträger (11) aus hochdämpfendem Gummi besteht und ein Gummi zwischen die benachbarten Halte- bzw. Dämpfungsplatten (13) eingesetzt ist, das eine geringe Dauerlaststauchung aufweist.

6. Ein erdbebensicherndes Gerät nach Anspruch 5, bei dem der Verlust des stark dämpfenden Gummis (TAN δ) bei 0,5 Hz und einer dynamischen Belastung von 0,5% von 0,1 bis 1,5 reicht.

7. Ein erdbebensicherndes Gerät nach Anspruch 5, bei dem der Betrag der Dauerlaststauchung des Gummis zwischen den haltenden Dämpfungsplatten 35% oder weniger bei einer 70°C-22 Stunden Wärmebehandlung beträgt.

8. Ein erdbebensicherndes Gerät nach Anspruch 5, bei dem in dem Lastträger das Gummi mit harten Platten abwechselt, wobei die harten Platten und das Gummi miteinander verbunden sind.

9. Ein erdbebensicherndes Gerät nach Anspruch 8, bei dem die harten Platten sich horizontal durch den Lastträger erstrecken und die Last teilen.

10. Ein erdbebensicherndes Gerät nach Anspruch 1, bei dem die haltenden Dämpfungsglieder die Form von Draht haben.

11. Ein erdbebensicherndes Gerät nach Anspruch 10, bei dem eine Vielzahl von getrennten Drahtringen konzentrisch übereinander gestapelt sind, um den Dämpfer bzw. Hälter zu bilden.

12. Ein erdbebensicherndes Gerät nach Anspruch 10, bei dem ein Drahtabschnitt schraubenlinienförmig gewunden ist, um den Halter bzw. Dämpfer zu bilden.

13. Ein erdbebensicherndes Gerät nach Anspruch 10, bei dem Halte- und Dämpfungsdrähte und ein elastischer Körper zu einer lamination Form um den Lastträger herum gebildet sind, wobei die Halte- und Dämpfungsdrähte und der elastische Körper in vertikaler Richtung miteinander abwechseln.

14. Ein erdbebensicherndes Gerät nach Anspruch 1 oder 6, bei dem der Lastträger aus einem stark dämpfenden Gummi besteht und die haltenden Dämpfungsglieder Halte- und Dämpfungsplatten und elastische Platten einschließen, die eine geringe Dauerlaststauchung aufweisen, mit Gleitgliedern zwischen ausgesuchten Platten, die aus den Halte- und Dämpfungsplatten und den elastischen Platten ausgesucht sind.

15. Ein erdbebensicherndes Gerät nach Anspruch 14, bei dem die Gleitglieder aus einem Material mit einem geringen Reibkoeffizienten bestehen.

16. Ein erdbebensicherndes Gerät nach Anspruch 1, bei dem der Lastträger ein Viskosefluid ist, das in den Halter bzw. Dämpfer eingeschlossen ist.

17. Ein erdbebensicherndes Gerät nach Anspruch 16, bei dem feste Platten sich horizontal durch das Viskosefluid erstrecken.

18. Ein erdbebensicherndes Gerät nach Anspruch 16, bei dem das Fluid eine Viskosität von 1,000 st bis 100,000 st aufweist.

19. Ein erdbebensicherndes Gerät nach Anspruch 14, bei dem eine der ausgewählten Platten aus der Zahl der haltenden Dämpfungsplatten ausgewählt ist und die andere der ausgewählten Platten aus der Zahl der elastischen Platten ausgewählt ist oder die ausgewählten Platten aus der Zahl der Halte- und Dämpfungsplatten ausgewählt sind und die ausgewählten Platten sich gegenüberliegend angeordnet sind und das Gleitglied zwischen den sich gegenüberliegenden Platten angeordnet ist, oder die ausgewählten Platten aus der Zahl der elastischen Platten ausgewählt werden.

20. Ein erdbebensicherndes Gerät nach Anspruch 15 oder 19, bei dem die Gleitglieder aus einem Material mit einem geringen Reibkoeffizienten bestehen und mit einem Gleitmittel imprägniert sind, das aus der Gruppe ausgewählt ist, die aus Silikonfett, PTFE und Harzschmiermitteln mit einem geringen Reibungskoeffizienten besteht.

21. Ein erdbebensicherndes Gerät nach Anspruch 1, bei dem die Elastomere, die eine gummiähnliche Viskoelastizität entwickeln, aus der Gruppe ausgewählt sind, die aus synthetischen Gummisorten und gummiähnlichen Kunststoffen besteht.

22. Ein erdbebensicherndes Gerät nach einem der Ansprüche 1 bis 21, bei dem die stark dämpfenden Gummisorten aus der Gruppe ausgewählt sind, die aus Nitril-Butadiengummi, Isobutylen-Isoprengummi, Polynorbornen und Butyl-Halogenidgummi besteht.


## Revendications

1. Dispositif résistant à l'épreuve des tremblements de terre du type contenu périphériquement comprenant un porte-charge élastique (11) adapté pour être disposé entre une superstructure et une infrastructure afin de porter une charge et un conteneur (12) qui contient périphériquement le porte-charge, caractérisé en ce que le conteneur (12) a une ouverture qui s'étend à travers lui dans la direction de la charge et dans laquelle le porte-charge (11) est disposé, en ce que le conteneur (12) comprend des éléments de contention (13) à structure feuilletée dans la direction de la charge pour développer une rigidité élevée contre une force de traction, et en ce que le porte-charge (11) est constitué par une matière élastique, visco-élastique ou visqueuse choisie dans le groupe composé du caoutchouc naturel et de ses dérivés,d'élastomères développant une visco-élasticité analogue à celle du caoutchouc et de caoutchoucs fortement amortisseurs.

2. Dispositif résistant à l'épreuve des tremblements de terre de la revendication 1 dans lequel les éléments de contention (13) sont des plaques rigides.

3. Dispositif résistant à l'épreuve des tremblements de terre de la revendication 2, dans lequel les plaques rigides (13) sont des plaques annulaires distinctes empilées les unes sur les autres pour composer le conteneur (12).

4. Dispositif résistant à l'épreuve des tremblements de terre de la revendication 2 dans lequel les plaques rigides (13) sont une bande d'une plaque enroulée en spirale pour composer le conteneur (12).

5. Dispositif résistant à l'épreuve des tremblements de terre de la revendication 2 dans lequel le porte-charge (11) est un caoutchouc fortement amortisseur, et un caoutchouc à faible déformation permanente de compression est interposé entre les plaques voisines (13) de contention.

6. Dispositif résistant à l'épreuve des tremblements de terre de la revendication 5 dans lequel la perte dudit caoutchouc fortement amortisseur (tg δ) à 0,5 Hz et une contrainte dynamique de 0,5% va de 0,1 à 1,5.

7. Dispositif résistant à l'épreuve des tremblements de terre de la revendication 5 dans lequel l'importance de la déformation permanente de compression dudit caoutchouc entre les plaques de contention est de 35% ou moins à un traitement thermique de 70°C-22 h.

8. Dispositif résistant à l'épreuve des tremblements de terre de la revendication 5 dans lequel des plaques dures alternent dans le porte-charge avec le caoutchouc, ces plaques dures et ce caoutchouc étant adhérant ensemble.

9. Dispositif résistant à l'épreuve des tremblements de terre de la revendication 8, dans lequel les plaques dures s'étendent horizontalement à travers la charge et divisent ce porte-charge.

10. Dispositif résistant à l'épreuve des tremblements de terre de la revendication 1 dans lequel les éléments de contention sont sous la forme de fils.

11. Dispositif résistant à l'épreuve des tremblements de terre de la revendication 10, dans lequel une pluralité d'anneaux distincts en fil sont empilés concentriquement, les uns sur les autres, pour composer le conteneur.

12. Dispositif résistant à l'épreuve des tremblements de terre de la revendication 10 dans lequel une longueur de fil est enroulée en spirale pour composer le conteneur.

13. Dispositif résistant à l'épreuve des tremblements de terre de la revendication 10, dans lequel des fils de contention et un corps élastique sont disposés en structure feuilletée autour du porte-charge, ces fils de contention et ce corps élastique aternant en sens vertical.

14. Dispositif résistant à l'épreuve des tremblements de terre de la revendication 10 ou de la revendication 6, dans lequel le porte-charge est en caoutchouc fortement amortisseur et les éléments de contention comprennent des plaques de contention et des plaques élastiques qui sont à faible déformation permanente de compression, avec des éléments anti-frottement entre des plaques choisies, sélectionnées entre les plaques de contention et les plaques élastiques.

15. Dispositif résistant à l'épreuve des tremblements de terre de la revendication 14, dans lequel les éléments anti-frottement sont en matière à faible coefficient de frottement

16. Dispositif résistant à l'épreuve des tremblements de terre de la revendication 1, dans lequel le porte-charge est un fluide visqueux enclos dans ledit conteneur.

17. Dispositif résistant à l'épreuve des tremblements de terre de la revendication 16, dans lequel des plaques de résistance au cisaillement s'étendent horizontalement à travers le fluide visqueux.

18. Dispositif résistant à l'épreuve des tremblements de terre de la revendication 16, dans lequel ledit fluide a une viscosité de 1000 st. à 100.000 st.

19. Dispositif résistant à l'épreuve des tremblements de terre de la revendication 14, dans lequel l'une des plaques choisies est sélectionnée parmi les plaques de contention et l'autre des plaques choisies est sélectionnée parmi les plaques élastiques, ou les plaques choisies sont sélectionnées parmi les plaques de contention, et les plaques choisies sont disposées face à face et l'élément anti-frottement est entre lesdites plaques face à face, ou les plaques choisies sont sélectionnées parmi les plaques élastiques.

20. Dispositif résistant à l'épreuve des tremblements de terre de la revendication 15 ou de la revendication 19, dans lequel les éléments anti-frottement sont en matière à faible coefficient de frottement imprégnée d'un lubrifiant choisi dans le groupe composé de la graisse de silicone, du PTFE et des lubrifiants en résine à faible coefficient de frottement.

21. Dispositif résistant à l'épreuve des tremblements de terre de la revendication 1, dans lequel lesdits élastomères développant une visco-élasticité analogue à celle du caoutchouc sont choisis dans le groupe composé des caoutchoucs synthétiques et des matières plastiques analogues au caoutchouc.

22. Dispositif résistant à l'épreuve des tremblements de terre de l'une quelconque des revendications 1 à 21, dans lequel lesdits caoutchoucs fortement amortisseurs sont choisis dans le groupe composé du caoutchouc butadiène-nitrile, du catouchouc isobutylène-isoprène, du polynorbornène et du caoutchouc à base d'halogénure de butyle.

# FIG.1

# FIG.2

# FIG.3

# FIG.4

# FIG.5

# FIG.6

# FIG. 7

# FIG. 8

# FIG. 9

20

# FIG.10 (a)

$C_1(c)$

12

11

# FIG.11 (a)

$C_2(c)$

12

11

# FIG.10 (b) $C_1(c)$

11

20
18
19
20
18
19

12

# FIG.11 (b)

$C_2(c)$

11

22
21
22
20

12

F I G.12 (a)

$\underline{C_3}(c)$

12

11

F I G.12 (b)

$C_3(c)$

20
24
23
24

11

12

# FIG.13

# FIG.14

# FIG.15

natural rubber (NR)

silicone grease

under substantial deformation

under less deformation

# FIG.16

highly damping rubber (IIR)

silicone grease

under substantial deformation

under less deformation

# FIG.17

highly damping rubber (IIR)

Teflon resin sheets

under substantial deformation

under less deformation

# FIG.18(a)

# FIG.18(b)

# FIG.19 (a)

# FIG.19 (b)

FIG.20 (a)

FIG.20 (b)

FIG.21 (a)

FIG.21 (b)

F I G.22 (a)

F I G.22 (b)

F I G.23 (a)

F I G.23 (b)

FIG.24(a)

FIG.24(b)

FIG.25(a)

FIG.25(b)

FIG.26(a)

FIG.26(b)

FIG.27(a)

FIG.27(b)

FIG.28 (a)

FIG.28 (b)

FIG.28 (c)

# FIG.29 (a)

$\underline{X}(\underline{Z})$

# FIG.29 (b)

$\underline{X}(\underline{Z})$

2

1

# FIG. 30 (a)

# FIG. 30 (b)

33

# FIG.31